(19) Europäisches Patentamt
European Patent Office
Office européen des brevets

(11) **EP 1 189 014 B1**

(12) **EUROPEAN PATENT SPECIFICATION**

(45) Date of publication and mention
of the grant of the patent:
**08.10.2008   Bulletin 2008/41**

(51) Int Cl.:
***G01B 7/06*** *(2006.01)*        ***G01B 17/02*** *(2006.01)*

(21) Application number: **01307847.2**

(22) Date of filing: **14.09.2001**

(54) **Method of buffing a tire**

Verfahren zum Abreiben eines Reifens

Méthode de meulage d'un pneu

(84) Designated Contracting States:
**DE ES FR GB IT**

(30) Priority: **14.09.2000   JP 2000280889**

(43) Date of publication of application:
**20.03.2002   Bulletin 2002/12**

(73) Proprietor: **Bridgestone Corporation**
**Tokyo (JP)**

(72) Inventors:
• **Tanaka, Tsutomu,**
**c/o Bridgestone Technical Center**
**Kodaira-city,**
**Tokyo (JP)**
• **Kurihara, Kiyoharu,**
**c/o Bridgestone Technical Cnt.**
**Kodaira-city,**
**Tokyo (JP)**
• **Usami, Shigeoki,**
**c/o Bridgestone Technical Center**
**Kodaira-city,**
**Tokyo (JP)**

• **Makino, Shigeo,**
**c/o Bridgestone Technical Center**
**Kodaira-city,**
**Tokyo (JP)**

(74) Representative: **Lamb, Martin John Carstairs**
**Marks & Clerk**
**90 Long Acre**
**London WC2E 9RA (GB)**

(56) References cited:
DE-A- 4 232 201        US-A- 3 675 375
US-A- 4 089 225        US-A- 5 095 744
US-A- 6 092 295

• PATENT ABSTRACTS OF JAPAN vol. 1997, no. 03, 31 March 1997 (1997-03-31) -& JP 08 304009 A (SUMITOMO RUBBER IND LTD), 22 November 1996 (1996-11-22) -& DATABASE WPI Week 199706 Derwent Publications Ltd., London, GB; AN 1997-055822 XP002257959

## Description

BACKGROUND OF THE INVENTION

Field of the Invention

This invention relates to a method of measuring a gauge of a used rubber portion from an outer circumferential surface to a belt layer in a buffed tire under a recapping process and also to a method of buffing.

Description of the Related Art

Recapping methods applied to used tires are roughly classified into two types; that is, molding/vulcanizing method (hot recapping method) using a die for tire and pre-curing method (cold recapping method) affixing pattern-curved vulcanized tread to a base tire and then vulcanizing the tire in a vulcanization chamber.

The used tires, when recapped in either of the above identified methods, have their tread portions shaved off during a buffing process to shape into a desired condition, and quality and performance of recaps (especially, heat resistance) depend upon a thickness from an embedded belt layer to an outer circumferential surface (i.e., a gauge of the used rubber portion) of each tire after undergoing the buffing.

The hot recapping method utilizes simultaneous molding and vulcanizing, and therefore, an outer circumferential length of the buffed tire is under control. Thus, a management and control of a gauge of the used rubber portion is regarded as a secondary subject of concern whereas it is a core subject to first cope with in the pre-cure method since the cold recapping method or the pre-curing method does not utilize a die nor a mold to control the outer circumferential length of the buffed tire, and accordingly, the latter method should have a goal of restraining the gauge of the used rubber portion within some standardized range.

In the prior art, a measurement of a gauge of used rubber portion of a tire has been carried out in such a manner that gashes and holes acquired in the surface of the buffed tire are used for references. Specifically, if the gashes and holes reach a belt layer, a recapping operator manually measures depths of them (the gauge of the used rubber portion) without undergoing a further procedure while if they do not, a tread portion of the tire is further shaved around the gashes and holes into the belt layer, and thereafter, the operator manually measures the depths of them.

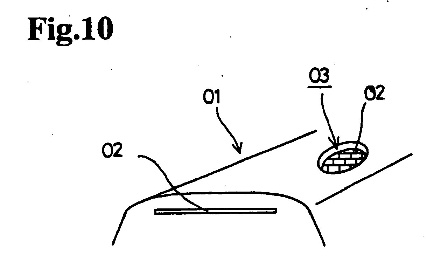

Particularly, as can be seen in Fig. 10, an outer circumferential surface of a base tire 01 is further excavated around a gash to create a hole 03 that reaches a belt layer 02, and then, a depth of the hole, namely, a gauge of used rubber portion of the tire is measured with a tool such as a scale.

It is an annoying and time-consuming task to only determine the gauge of the used rubber portion for any one of holes acquired in the buffed tire.

Measuring only one point of the buffed tire is not reliable while measuring more than one points is time-consuming and laborious.

When the measurement result on the gauge of the used rubber portion is not within the standardized range, the buffing and succeeding measuring procedures must be repeated till the processing results fall within the standardized range, and this causes a post-buffing outer circumferential length (i.e., a resultant outer circumferential length) to be varied from one base tire to another, which consequently leads to a failure in configuring a consistent management system of a gauge of used rubber portion of tire throughout the entire procedural steps of manufacturing recaps and therefore causes a difficulty in enhancing a manufacturing efficiency without changing a certain level of product quality.

US patent number 3,675,375 discloses a method for measuring the thickness of a lire being prepared for retreading.

Japanese publication number 08304009 discloses an apparatus and method for measuring the thickness of a tire.

US patent number 6,092,295 discloses an undertread measuring apparatus, which can automatically relocate itself after disturbance.

SUMMARY OF THE INVENTION

The present invention is made to cope with the above-mentioned disadvantages, and accordingly, it is an object of the present invention to provide a buffing method according to which a workability of the buffing process and a quality of the resultant recap can be maintained at high levels while a manufacturing efficiency is enhanced.

The present invention as defined in Claim 1 is a method of buffing, which comprises the steps of, buffing a preliminarily buffed tire along its outer circumferential extension, using an eddy-current sensor to determine a gauge of used rubber portion, or which is the thickness from an outer circumferential surface to a belt layer in the rebuffed tire for a subsequent recapping process, computing an outer circumferential length of belt from an outer circumferential length of the preliminarily buffed tire and the determined gauge of the used rubber portion of the rebuffed tire, classifying the outer circumferential length of the belt into a type that is varied depending upon a tolerance for acceptable performance, specifying one standardized outer circumferential length of the buffed tire for each type of the outer circumferential length of the belt, and shaving the rebuffed tire off its outer circumference till its outer circumferential length reaches the specified standard length to finish and shape the tire into a base tire.

In this way, the eddy-current sensor can be used to effectively measure the gauge of the used rubber portion of the tire that has been rebuffed after the preliminarily buffing without invasion and damage in the used rubber portion, the outer circumferential length of the belt can be obtained from the gauge of the used rubber portion of the rebuffed tire and the outer circumferential length.of the preliminarily buffed tire, one standardized length is designated to each of types that are classified depending upon the tolerance for acceptable performance and the preliminarily buffed tire has its outer circumference buffed again to reach the standardized length so as to ultimately create a base tire. Hence, repeating the buffing procedure twice enables the base tire to be finished, and the buffing procedure can be performed effectively.

By virtue of a single standardized value of the outer circumferential length of the rebuffed tire which is designated to each of the types that vary from one to the other depending on a tolerance for acceptable performance, a standardized management system over the gauge of the used rubber portion of the tire can be configured throughout the entire manufacturing process of recap, and with such a system, a production efficiency of recaps can be enhanced, maintaining a certain level of quality of the products.

BRIEF DESCRIPTION OF THE DRAWINGS

Fig. 1 is a schematic diagram showing procedural steps of manufacturing recaps in a precure recapping method;

Fig. 2 is a diagram showing procedural steps of the buffing;

Fig. 3 is a schematic side view showing a buffing device;

Fig. 4 is a partial sectional view showing a buffed tire;

Fig. 5 is a diagram illustrating a manner in which an eddy-current sensor is used to measure a gauge of used rubber portion of the buffed tire;

Fig. 6 is a graph showing a relative property of voltage V detected by the eddy-current sensor to the gauge g of the used rubber portion;

Fig. 7 is a table showing an average and standard deviation of outer circumferential belt lengths on products from one and more than one manufacturers, respectively;

Fig. 8 is a graph illustrating a distribution property of an outer circumferential belt length Lb;

Fig. 9 is a graph illustrating a distribution property of an outer circumferential base tire length Lc that is classified and standardized in three types; and

Fig. 10 is a partial view of the base tire, depicting a prior art method of measuring a gauge of used rubber portion of tire.

DESCRIPTION OF THE PREFERRED EMBODIMENTS

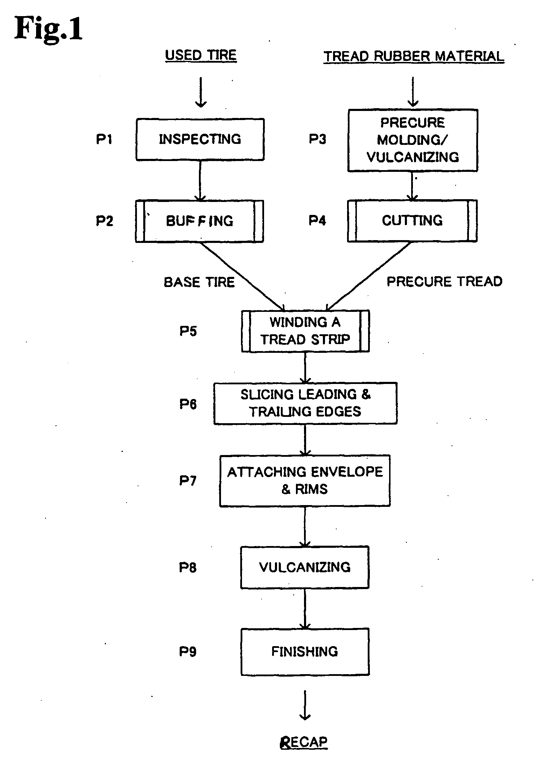

Preferred embodiments of the present invention will now be described with reference to Figs. 1 to 9. A method of a gauge of used rubber portion of a buffed tire and a method of buffing according to the present invention are applied to the precure recapping of used tire.

The precure recapping is a retreading method in which after used tire has its tread shaved off to recreate a base tire, tread vulcanized and molded with pattern grooved therein is attached to the base tire and then vulcanized in a vulcanization chamber to recap the used tire. Procedural steps of creating recap by means of the precure recapping are outlined in Fig. 1.

In an inspection process P1, used tire has its surface, holes made by nails, and gashes examined to determine if it is recappable by means of the retreading, and if not, the tire is excluded.

The recappable tire subsequently undergoes buffing in the next process P2, and it has an outer circumferential surface shaved off the tread to finish it into a base tire.

The base tire is fixed by partial polishing and/or filling during buffing and winding procedures.

In a process P3 carried out in parallel, tread rubber material is subjected to the precure vulcanizing and molding to create pattern-grooved tread.

The precure tread vulcanized and molded with pattern grooved therein is shaped in continent belt, and it is cut into strips of desired lengths during a cutting procedure in the next process P4.

In a winding process P5, the precure tread is wound around the base tire. In advance of the winding of the precure tread, after coating the outer circumferential surface of the base tire with cement, cushion sheet is affixed, or alternatively, cushioning may be applied directly to the base tire by a push bench.

The tire at this point is rotatably supported, and the precure tread from a feeder is sent and wound around the outer circumferential surface of the tire.

In a succeeding process P6, leading and trailing edges of the precure tread wound on the base tire are joined and bonded by a stapler with the cushion rubber intervening between the tire and the tread.

The base tire muffled by the precure tread is enclosed in a suck-shaped sheet or an envelope, and beads are attached to rims (process P7) so as to air-tightly seal the envelope.

After being wound by the precure tread and enclosed in the envelope, several of the base tires together are put in the vulcanization chamber and vulcanized (process P8).

After the vulcanization, the rims and envelop are removed to finish the tires into recaps (process P9).

The present invention relates to the buffing in the process P2 among the aforementioned procedures.

The buffing procedure will be detailed below.

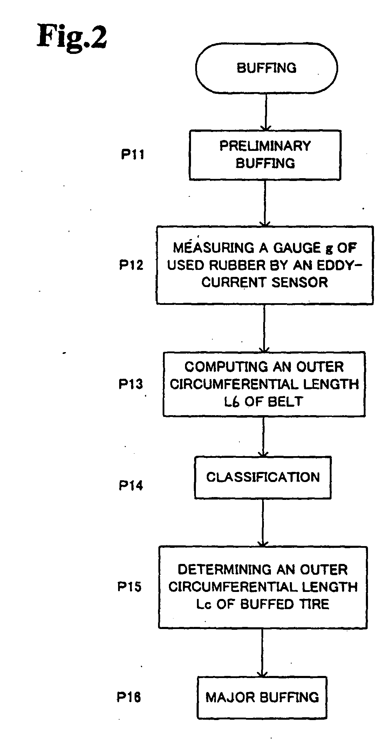

As illustrated in Fig. 2, a sequence of procedural steps are carried out, including the steps of roughly (preliminarily) buffing (process P11), measuring a gauge of used rubber portion (process P12), computing an outer circumferential length Lb of belt (process P13), classifying into types (process P14), determining an outer circumferential lengt Lc of buffed tire (process P15), and rebuffing (process P16).

In the preliminary buffing process P11, used tire is roughly shaved to have its outer circumferential length reach a predetermined length Lo.

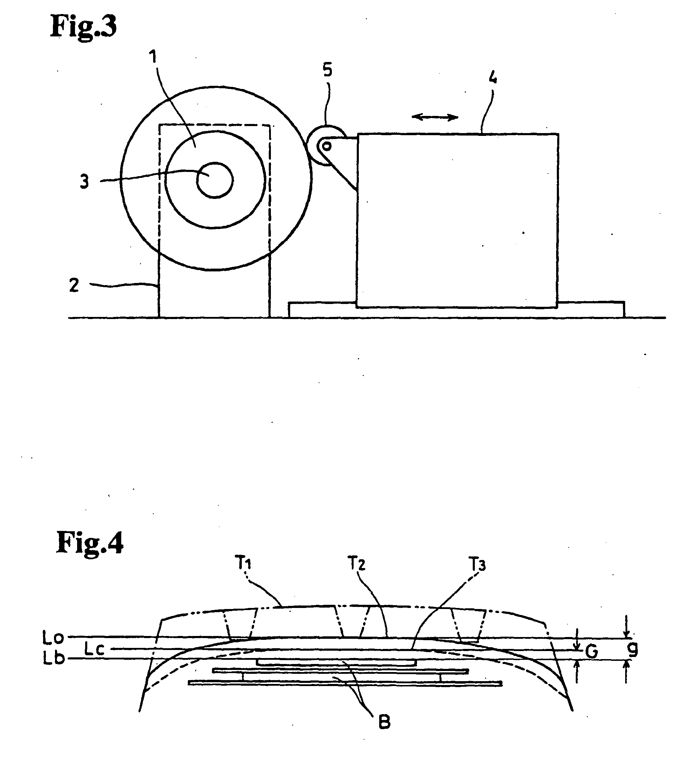

As can be recognized in Fig. 3, used tire T1 with a rim 1 attached thereto is fitted on a rotation axis 3 on a base plate 2 and rotatably supported at a fixed position while a grinder 5 moves along with a sliding stand 4 to come close to and come in contact with the outer circumferential surface of the tire T1.

The grinder 5, revolving and touching the tire T1 that is also rotating in the fixed position, can shave down the tire T1 off its outer circumferential surface.

The grinder 5 can be adjusted in its relative position to the tire T1 to scrape the tire T1 and reduce its radius to a predetermined level. In this way, the tire T1 is roughly shaved off its outer circumferential surface to reach a predetermined preliminary outer circumferential length Lo in the process P11.

Fig. 4 shows a partial sectional view of the roughly buffed tire T2. A contour of the tire T1 is denoted by two-dot and broken line, and it can be seen that as a result of the rough buffing, the tire T1 is removed till a pattern grooved in the tire T1 can no longer be recognized, so as to shape the buffed tire T2 having the preliminary outer circumferential length Lo. As shown in Fig. 4, a steel belt layer B is embedded in the buffed tire T2.

A rubber layer remaining over the steel belt layer B is equal in thickness to the gauge g of the used rubber portion while the buffed tire T2 is also equal to the gauge g in a distance from the steel belt layer B (of an outer circumferential belt length Lb) to the outer circumferential surface of the buffed tire T2 (of the preliminary outer circumferential length Lo).

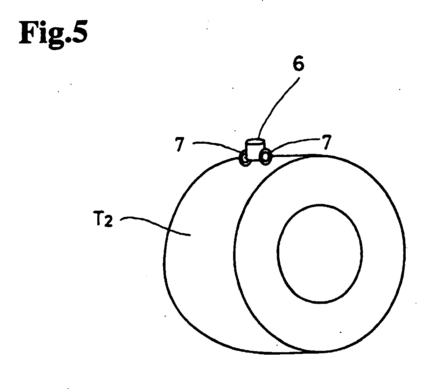

In the next process P12, as illustrated in Fig. 5, an eddy-current sensor 6 supported by a pair of wheels 7 resides on the roughly buffed tire T2, and rotating the buffed tire T2 enables the eddy-current sensor 6 to trace a circumferential surface of the buffed tire T2 at a certain distance therefrom.

The eddy-current sensor 6 is positioned right above the buffed tire T2 and has its detection coil positioned close to the steel belt layer B, and high-frequency current flowing in the detection coil induces magnetic flux, which, in turn, varies to cause eddy current in the steel belt layer B.

Since the eddy current induces magnetic flux and acts upon the detection coil to vary impedance, the variation in the impedance of the detection coil is read out as a distance signal in voltage. The detected voltage indicates a distance from the eddy-current sensor 6 to the upper most steel belt in the steel belt layer B within the buffed tire T2.

A relative property of voltage V detected by the eddy-current sensor 6 to the gauge g of the used rubber portion varies depending upon belt configurations altered in line form and number of steel codes used in the outer most layer of the steel belt layer B that is embedded in the buffed tire T2, and hence, an appropriate conversion method should be determined for each type of the belt configurations by preliminarily testing the relative property between those factors for each type of the belt configurations.

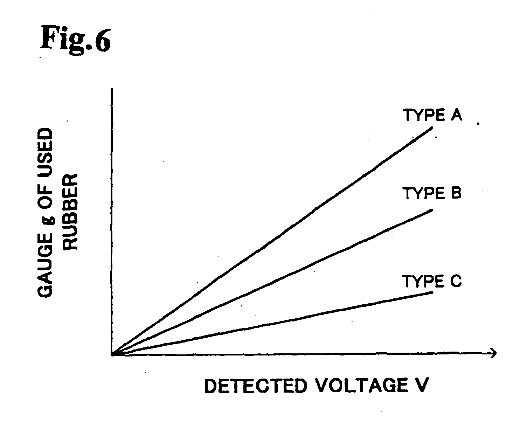

Fig. 6 is a graph illustrating straight lines (master curves) denoting the relative property of the voltage V detected by the eddy-current sensor 6 to the gauge g of the used rubber for each type of the belt configurations, Type A, Type B, and Type C.

Since the eddy-current sensor 6 traces the outer circumferential surface of the buffed tire T2 at a certain distance therefrom, the distance detected by the eddy-current sensor 6 from the detection coil to the upper most steel belt of the steel belt layer B, when reduced by a predetermined distance, becomes equal to the gauge g of the used rubber, and besides, further setting the master curves as illustrated in Fig. 6 enables a direct calculation of the gauge g of the used rubber from the voltage V detected by the eddy-current sensor 6.

As has been described, using the eddy-current sensor 6 facilitates a measurement of the gauge g of the used rubber portion without invasion and damage, eliminating a need of using gashes and holes acquired in the rubber portion, and moreover, the eddy-current sensor 6 tracing over the rotating buffed tire T2 enables an efficient measurement of the gauge g of the user rubber portion in more than one points along a circumferential extension.

Since the gauge g of the used rubber portion is measured at more than one points, an average gauge g derived from the measurements is reliable.

Once the gauge g of the used rubber portion is measured in the above-mentioned manner, a mathematical operation based on the following equation is carried out in the next process P13 to obtain the outer circumferential belt length Lb or the outer circumferential length of the upper most steel belt in the steel belt layer B:

$$Lb = Lo - g \cdot 2\pi$$

The outer circumferential belt length Lb is varied from one manufacturer to another if it is derived from the same type of tire, and the rest results over tires of 295/75R225 and its equivalents in size is shown in Fig. 6.

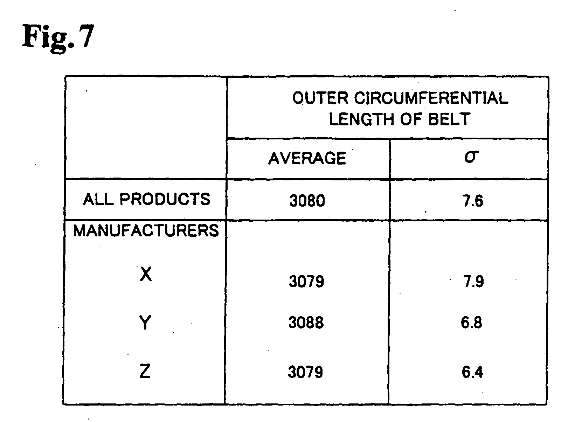

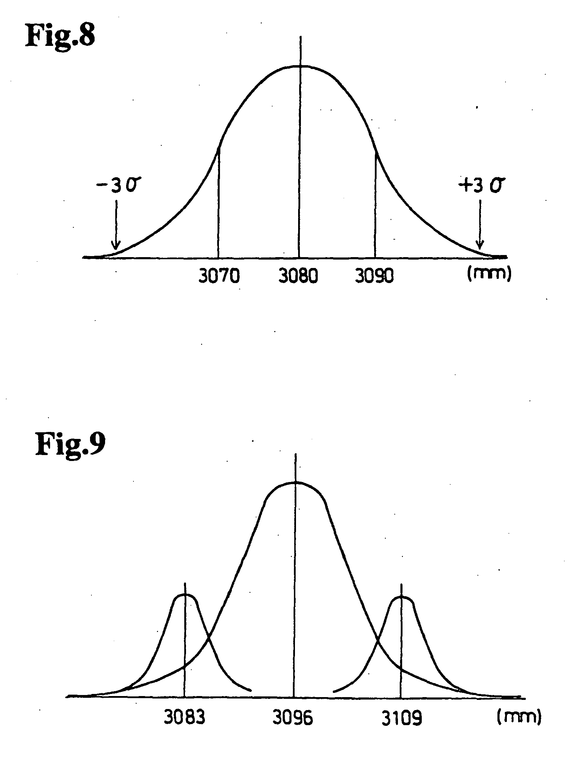

As can be seen in a table of Fig. 7, an average value and a standard deviation $\alpha$ are varied among manufacturers. A distribution property of the entire data on products from all the manufacturers are apparent as in Fig. 8, providing a regular distribution property where the average value is 3080 mm while the standard deviation $\alpha$ is 7.6 mm.

The same example will be further detailed below.

In the process P14, the buffed tire T2 is classified depending upon its outer circumferential belt length Lb. One classification type covers a tolerance of $\pm 10$ mm from the average 3080 mm of the outer circumferential belt length Lb for an acceptable performance (i.e., from 3070 mm to 3090 mm), and ranges below 3070 mm and above 3090 mm are classified in different types. Thus, there are three classification types depending upon the outer circumferential belt length Lb, namely, types of 3070 mm or below, between 3070 mm and 3090 mm, and 3090 mm and above.

In the process P15, a thickness of the used rubber layer that must remain over the belt layer (i.e., the desired gauge G of the used rubber portion) is set, and the eventual outer circumferential length Lc of the buffed tire is determined for each classification type.

In the aforementioned example, the desired gauge G of the used rubber portion is set at 2.5 mm, and the outer circumferential length Lc of the buffed tire is standardized as 3096 (= 3080 + 2.5 $\times$ 2 $\pi$) mm for the classification type covering the tolerance $\pm 10$ mm from the average 3080 mm or the mean value of the outer circumferential belt length Lb while it is standardized as 3083 (= 3096 - 3 $\times$ $\sigma$ + 10) mm and 3109 (= 3096 + 3 $\times$ $\sigma$ - 10) mm for the respective classification types covering a range 3070 mm or below and a range 3090 mm or above in symmetrical relation with 3096 mm or the mean value of the outer circumferential length of the buffed tire.

In this way, the outer circumferential length Lc of the buffed tire, which is standardized for each classification type, is determined, and depending upon the value of the outer circumferential length Lc, the roughly or preliminarily buffed tire is rebuffed in the next major buffing process P16 to finally shape a base tire T3.

A contour of the base tire T3 having the preliminary outer circumferential length Lc is illustrated by broken line in Fig. 4 wherein the tire undergoes the rebuffing so as to leave a thickness corresponding to the desired gauge G of the used rubber portion.

The buffed tire T2 having the outer circumferential belt length Lb of the mean value 3080 mm $\pm$ 10 mm is rebuffed to have the outer circumferential length of 3096 mm, the buffed tire T2 having the outer circumferential belt length Lb of 3070 mm or below is rebuffed to have the outer circumferential length of 3083 mm, and the buffed tire T2 having the outer circumferential belt length Lb of 3090 mm or above is rebuffed to have the outer circumferential length of 3109 mm.

Thus, the base tire T3 has an outer circumferential length (outer circumferential base tire length) that is varied among those three standardized values of the outer circumferential length Lc of the rebuffed tire, and the outer circumferential base tire length (outer circumferential length) Lc gives a distribution property as illustrated in Fig. 9.

A symmetrical distribution about the mean value 3096 mm is centered between symmetrical distributions about the mean values 3083 mm and 3109 mm. In the succeeding procedural steps, the outer circumferential base tire length Lc is selectively referenced to three values, 3083 mm, 3096 mm, and 3109 mm.

For instance, the precure tread wound around the base tire T3 is belt that is, in the process P4, cut into strips having a predetermined length determined on the outer circumferential base tire length Lc, and hence, the length (tread length Lt) of the strips sectioned from the precure tread is also under control, designated to any of three tread lengths Lt that depend upon the three values of the outer circumferential base tire length Lc.

The outer circumferential belt length Lb derived from the measured gauge g of the used rubber portion is classified depending upon a tolerance for an acceptable performance while the outer circumferential base tire length Lc is standardized in a single value for each classified type. Hence, this advantageously configures a standardized management system over the gauge g of the used rubber portion throughout the entire manufacturing procedures of recaps, and a production efficiency of the recaps can be improved, maintaining a certain level of quality of the products.

In the embodiment as mentioned above, although the outer circumferential belt length Lb is classified into three types, it may be classified more than three types when the tolerance distribution of sample products is unusually irregular.

**Claims**

1. A method of buffing, comprising the steps of:

   buffing a preliminarily buffed tire along its outer circumferential extension, using an eddy-current sensor (6) to determine a gaug (g) of used rubber portion, which is the thickness from an outer circumferential surface to a belt layer (B) in the rebuffed tire for a subsequent recapping process;
   computing an outer circumferential length (Lb) of belt (B) from an outer circumferential length (Lo) of the preliminarily buffed tire and the gauge of the used rubber portion of the rebuffed tire determined in the previous step;
   classifying the outer circumferential length (Lb) of the belt (B) into a type that is varied depending upon a tolerance for acceptable performance;
   specifying one standardized outer circumferential length (Lc) of the buffed tire for each type of the outer circumferential length of the belt; and
   shaving the rebuffed tire off its outer circumference till its outer circumferential length reaches the standard length specified in the previous step to finish and shape the tire into a base tire.

**2.** A method of buffing according to claim 1, wherein the outer circumferential lengths (Lb) af the belt layers (B) are classified into three different types.

**3.** A method of buffing according to claim 1, wherein the eddy-current sensor (6) is caused to sweep at a constant distance from the outer circumferential surface of the buffed tire to measure said gauge (g).

## Patentansprüche

**1.** Verfahren zum Abreiben, das die folgenden Schritte aufweist:

Abreiben eines vorabgeriebenen Reifens längs seiner äußeren peripheren Ausdehnung bei Verwendung eines Wirbelstromsensors (6), um ein Maß (g) des benutzten Gummiabschnittes zu ermitteln, das die Dicke von einer äußeren Umfangsfläche zu einer Gürtellage (B) im erneut abgeriebenen Reifen für einen anschließenden Runderneuerungsvorgang ist;
Berechnen einer äußeren Umfangslänge (Lb) des Gürtels (B) aus einer äußeren Umfangslänge (Lo) des vorabgeriebenen Reifens und des Maßes des benutzten Gummiabschnittes des erneut abgeriebenen Reifens, das beim vorhergehenden Schritt ermittelt wird;
Einstufen der äußeren Umfangslänge (Lb) des Gürtels (B) in eine Form, die in Abhängigkeit von einer Toleranz für eine akzeptable Leistung variiert wird;
Spezifizieren einer standärdisierten äußeren Umfangslänge (Lc) des abgeriebenen Reifens für jede Form der äußeren Umfangslänge des Gürtels; und
Abschälen des erneut abgeriebenen Reifens von seinem äußeren Umfang, bis seine äußere Umfangslänge die Standardlänge erreicht, die beim vorhergehenden Schritt spezifiziert wird, um den Reifen zu einem Basisreifen fertigzustellen und zu formen.

**2.** Verfahren zum Abreiben nach Anspruch 1, bei dem die äußeren Umfangslängen (Lb) der Gürtellagen (B) in drei unterschiedliche Formen eingestuft werden.

**3.** Verfahren zum Abreiben nach Anspruch 1, bei dem der Wirbelstromsensor (6) veranlasst wird, mit einem konstanten Abstand von der äußeren Umfangsfläche des abgeriebenen Reifens abzutasten, um das besagte Maß (g) zu messen.

## Revendications

**1.** Procédé de brossage, comprenant les étapes ci-dessous :

brossage d'un bandage pneumatique à brossage préliminaire le long de son extension circonférentielle externe, en utilisant un capteur à courant de Foucault (6) pour déterminer une épaisseur (g) de la partie de gomme usée, correspondant à l'épaisseur entre une surface circonférentielle externe et une nappe de ceinture (B) dans le bandage pneumatique soumis à un nouveau brossage, en vue d'un processus de rechapage ultérieur ;
calcul d'une longueur périphérique externe (Lb) de la ceinture (B), sur la base d'une longueur circonférentielle externe (Lo) du bandage pneumatique à brossage préliminaire et de l'épaisseur de la partie de gomme usée du bandage pneumatique soumis à un nouveau brossage, déterminée lors de l'étape précédente ;
classement de la longueur circonférentielle externe (Lb) de la ceinture (B) en un type qui est changé en fonction d'une tolérance concernant les performances acceptables ;
spécification d'une longueur circonférentielle externe standardisée (Lc) du bandage pneumatique à brossage pour chaque type de la longueur circonférentielle externe de la ceinture ; et
raclage de la circonférence externe du bandage pneumatique soumis à un nouveau brossage jusqu'à ce que sa longueur circonférentielle externe corresponde à la longueur standard spécifiée au cours de l'étape précédente pour finir et former le bandage pneumatique en un bandage pneumatique de base.

**2.** Procédé de brossage selon la revendication 1, dans lequel les longueurs circonférentielles externes (Lb) des nappes de ceinture (B) sont classées en trois types différents.

**3.** Procédé de brossage selon la revendication 1, dans lequel le capteur à courant de Foucault (6) est entraîné à effectuer un balayage à une distance constante de la surface circonférentielle externe du bandage pneumatique à brossage pour mesurer ladite épaisseur (g).

# Fig.1

USED TIRE                    TREAD RUBBER MATERIAL

P1 | INSPECTING |        P3 | PRECURE MOLDING/ VULCANIZING |

P2 | BUFFING |            P4 | CUTTING |

BASE TIRE                              PRECURE TREAD

P5 | WINDING A TREAD STRIP |

P6 | SLICING LEADING & TRAILING EDGES |

P7 | ATTACHING ENVELOPE & RIMS |

P8 | VULCANIZING |

P9 | FINISHING |

RECAP

7

# Fig.2

```
        ( BUFFING )
             │
             ▼
P11   ┌─────────────────┐
      │   PRELIMINARY   │
      │    BUFFING      │
      └─────────────────┘
             │
             ▼
P12   ┌─────────────────┐
      │ MEASURING A GAUGE g OF │
      │ USED RUBBER BY AN EDDY- │
      │   CURRENT SENSOR │
      └─────────────────┘
             │
             ▼
P13   ┌─────────────────┐
      │ COMPUTING AN OUTER │
      │ CIRCUMFERENTIAL LENGTH │
      │    Lb OF BELT   │
      └─────────────────┘
             │
             ▼
P14   ┌─────────────────┐
      │  CLASSIFICATION │
      └─────────────────┘
             │
             ▼
P15   ┌─────────────────┐
      │ DETERMINING AN OUTER │
      │ CIRCUMFERENTIAL LENGTH │
      │ Lc OF BUFFED TIRE │
      └─────────────────┘
             │
             ▼
P16   ┌─────────────────┐
      │  MAJOR BUFFING  │
      └─────────────────┘
```

## Fig.3

## Fig.4

# Fig.5

# Fig.6

GAUGE g OF USED RUBBER

TYPE A

TYPE B

TYPE C

DETECTED VOLTAGE V

# Fig.7

| | OUTER CIRCUMFERENTIAL LENGTH OF BELT | |
| --- | --- | --- |
| | AVERAGE | $\sigma$ |
| ALL PRODUCTS | 3080 | 7.6 |
| MANUFACTURERS | | |
| X | 3079 | 7.9 |
| Y | 3088 | 6.8 |
| Z | 3079 | 6.4 |

**Fig.8**

**Fig.9**

# Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3675375 A
- JP 08304009 B
- US 6092295 A